Europäisches Patentamt

European Patent Office

Office européen des brevets

(19)

(11) Publication number: **0 091 172
B1**

(12) **EUROPEAN PATENT SPECIFICATION**

(45) Date of publication of patent specification: **29.06.88**

(51) Int. Cl.⁴: **F 42 C 13/04, G 01 S 13/50**

(21) Application number: **83200468.3**

(22) Date of filing: **05.04.83**

(54) An electromagnetic proximity fuse.

(30) Priority: **06.04.82 SE 8202181**

(43) Date of publication of application:
**12.10.83 Bulletin 83/41**

(45) Publication of the grant of the patent:
**29.06.88 Bulletin 88/26**

(84) Designated Contracting States:
**DE FR GB SE**

(56) References cited:
**FR-A-2 204 811
US-A- 192 235
US-A-3 161 877
US-A-3 195 136
US-A-3 823 399
US-A-4 118 702
US-A-4 218 977**

(73) Proprietor: **Philips Norden AB
Tegeluddsvägen 1
S-11584 Stockholm (SE)**

(84) **SE**

(73) Proprietor: **N.V. Philips' Gloeilampenfabrieken
Groenewoudseweg 1
NL-5621 BA Eindhoven (NL)**

(84) **DE FR GB**

(72) Inventor: **Thordarson, Gunnar Gudmund
INT. OCTROOIBUREAU B.V. Prof. Holstlaan 6
NL-5656 AA Eindhoven (NL)**

(74) Representative: **De Jongh, Cornelis Dominicus
et al
INTERNATIONAAL OCTROOIBUREAU B.V. Prof.
Holstlaan 6
NL-5656 AA Eindhoven (NL)**

Courier Press, Leamington Spa, England.

## Description

The invention relates to a proximity fuse for projectiles, missiles or the like comprising means for transmission of an electromagnetic wave and reception of an electromagnetic wave which is reflected by an object, and a signal processing unit for comparing the current value of an input signal with the value of the input signal a given time interval previously, comprising the series circuit of an amplitude divider, a filter and a fuse igniting circuit.

Such a proximity fuse is known from US patent 4,192,235, where the signal processing circuit consists of an automatic gain control circuit for a receiver amplifier comprising a delay filter connected in the feed-back loop. By the fact that the gain control takes place with time delay from the output of the amplifier this circuit will produce an output signal, which is an approximative value for the quotient between the current value of the amplitude of the doppler signal and its amplitude a given time interval previously. This quotient varies in a characteristic manner with the distance to the reflecting object and can consequently be used for initiating the fuse ignition circuit at a desired distance from the object. The dynamic course of this quotient is, however, dependent upon the approaching speed of the projectile against the object and in order to be able to initiate the fuse ignition circuit at a desired distance it is consequently necessary to know this approaching speed. Furthermore, the said automatic gain control circuit in the known device gives as mentioned only an approximate value of the quotient between the amplitude of the prevailing doppler signal and its amplitude said given time interval previously and how good the approximation is depends i.a. on the time constant in the control circuit in relation to the dynamic behaviour of the doppler signal, which in turn is dependent upon the approaching speed.

The known circuit therefore operates in principle only for one signal approaching speed in its desired function to give a constant distance of burst and it is also assumed in the patent specification that this approaching speed is constant and known.

The object of invention is to propose a signal processing circuit in a proximity fuse of the kind described in the introductory paragraph, which produces a more accurate determination of the distance indicating function than the known circuit and in which it is not necessary to know the approaching speed but which circuit will result in a constant, desired distance of burst independently of the approaching speed.

According to the invention this is achieved in the said means combine reflected waves with the transmitted waves to generate a doppler signal, that the amplitude divider receives at one input a doppler signal $(U_1)$, receives at a second input a delayed version of the doppler signal $(U_2)$, and delivers a signal of doppler frequency, the amplitude of which corresponds to the quotient $(U_1/U_2)$ of the current value of the amplitude $(U_1)$ of the doppler signal and the amplitude $(U_2)$ of the delayed version of the doppler signal, that said signal of doppler frequency is fed to the fuse ignition circuit via a filter having a transfer function which is approximately represented by the expression: $1/(1+f_d/f_0)$ and being normalised by a factor $1/f_0$ where $f_0$ is a system parameter and $f_d$ is the frequency of the doppler signal, that triggering of the fuse ignition circuit takes place when the output signal of the filter exceeds a certain level, and that the constant $f_0$ and the triggering level have such predetermined values that the fuse ignition circuit is triggered at a predetermined distance from the reflected object.

By feeding the doppler signal and the delayed version of the doppler signal to two different inputs of an analogue divider an exact measurement of the quotient between the prevailing value of the amplitude of the doppler signal and its amplitude a given time interval previously is obtained in a simple manner which quotient varies with the distance to the reflecting object according to a theoretically known function containing the approaching speed against the target, and by thereafter feeding the output signal of the divider to the ignition circuit via a filter having the mentioned frequency characteristic the effect of different approaching speeds will be compensated and burst will be initiated at a given distance independently of the approaching speed, if the ignition circuit is triggered when the output signal of the filter exceeds a given, fixed threshold level.

A simple realization is obtained if as filter with the said frequency characteristic is selected a circuit comprising an RC-link of low-pass type. This results in a very good approximation of the desired filter characteristic within a given frequency band.

A better approximation of the desired frequency characteristic is obtained if as filter is used an RC-filter of second order. With suitable dimensioning such a filter can give practically exact conformity between the obtained filter characteristic and the theoretically correct characteristic within a given frequency band.

The delayed version of the doppler signal can also with advantage be generated by means of a simple linear filter of low-pass or band-pass type preceded by an envelope detector for the doppler signal. The advantage with the use of such a filter instead of a pure delay line is that the obtained signal will represent a smoothed mean value of the signal during a foregoing time interval, whereby instantaneous disturbances in the doppler signal will not have any influence on the distance indicating quotient signal from the analogue divider.

The invention is illustrated in the accompanying drawings, in which

Fig. 1 shows a simplified block diagram for the signal processing circuit in a proximity fuse according to the invention.

Fig. 2a and 2b show two embodiments of a filter included in the circuit according to Fig. 1,

Fig. 3a and 3b show the frequency characteristic for the filters according to Fig. 2a and 2b together with the theoretically correct characteristic.

Fig. 4 shows an embodiment of an analogue divider which is included in the circuit shown in Fig. 1, and

Fig. 5a and 5b show two pulse responses for a delay network included in the circuit according to Fig. 1,

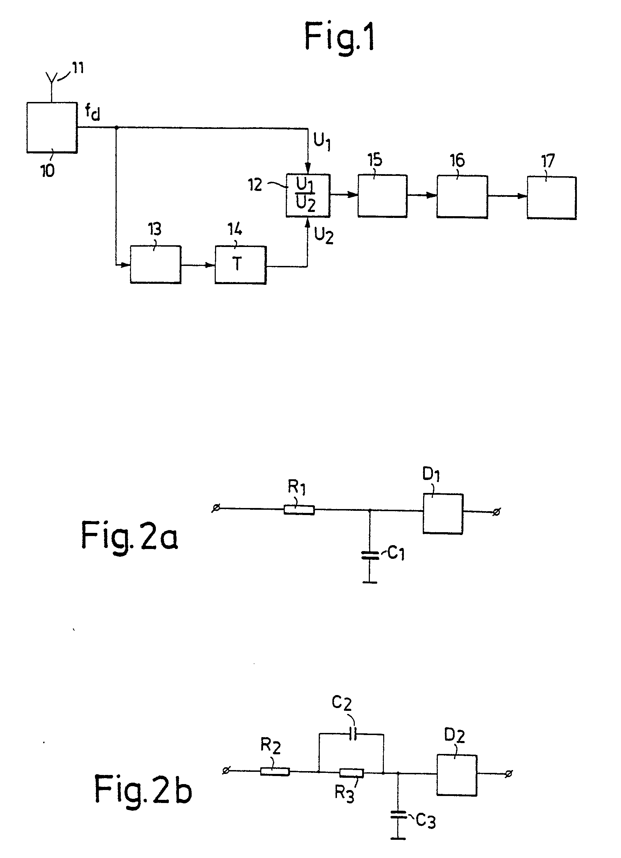

In Fig. 1 reference numeral 10 designates a sensor unit comprising a HF-oscillator for generating a HF-signal and 11 is an antenna for transmission of the HF-signal and reception of a reflected signal after reflection against an object. In the sensor unit the transmitted and the received HF-signals are combined for generating a doppler signal of doppler frequency $f_d$, which forms the output signal of the sensor unit and is used to initiate burst at a desired distance from the reflecting object.

According to the invention the doppler signal from the sensor unit is led to one input of an analogue divider 12, which at a second input receives a delayed version of the envelope of the doppler signal generated by an envelope detector 13 and a delay network 14. The analogue divider supplies a signal which is equal to the quotient between the signal on the first input and the signal on the second input. In the present case thus a signal of doppler frequency is obtained from the divider 12, the amplitude of which is equal to the prevailing amplitude of the doppler signal $U_1$ divided with its amplitude $U_2$ a given time interval previously. This output signal from the divider 12 is led through a filter 15 having an accurately determined frequency characteristic, as will be explained more in detail in the following, to a threshold circuit 16, the output signal of which is used to initiate an ignition circuit 17. The threshold circuit 16 has a fixed threshold and the ignition circuit 17 is initiated at a given level of the output signal of the filter 15 determined by the fixed threshold in the threshold circuit. The parameters in the circuit and in particular the frequency characteristic of the filter in combination with the fixed threshold in the threshold circuit 16 are then so selected that triggering of the ignition circuit takes place at a constant, desired burst height above the ground, which in the present case is the reflecting object.

The invention is based upon the following theoretical discussion:

For a CW doppler system the following relationship is valid:

$$U = \frac{k}{H} \qquad (1)$$

where
U=the amplitude of the detected doppler signal,
H=the height of the proximity fuse above the ground
k=a constant which depends on
a) the reflection factor of the ground

b) the sensitivity of the HF system and the detector
c) the antenna gain of the proximity fuse.

This means that the detected amplitude U at a given height is dependent upon both the reflection of the ground and the properties of the proximity fuse. In order to obtain an accurately determined burst height by means of the CW doppler system thus the constant k must be known. This could be achieved thereby that one tries to determine k as accurately as possible before firing the projectile, on which the proximity fuse is mounted, and thereafter sets a suitable threshold threshold level for the amplitude U in the proximity fuse. Account then must be taken to the sensitivity of the proximity fuse on the actual projectile and the reflection factor of the ground in the target area.

An alternative manner to obtain constant height of burst is to determine the constant from the dynamic behaviour of the signal, when the proximity fuse approaches ground.

If $U_1$ designates the amplitude of the doppler signal at the height h and $U_2$ designates the amplitude at the height (h+x) then according to the relationship (1) the following is valid:

$$U_1 = \frac{k}{h} \qquad (2)$$

$$U_2 = \frac{k}{h+x} \qquad (3)$$

By dividing the relationship (2) with (3) the following is obtained

$$\frac{U_1}{U_2} = \frac{h+x}{h} \qquad (4)$$

The height difference x is the equation (3) corresponds to a time delay T according to the relationship:

$$x = v \cdot T \qquad (5)$$

where v = the vertical speed of the projectile.

By inserting desired height of burst $H_o$ and a suitable value on the time constant T in the relationship (4) thus the following condition can be obtained for the triggering of the ignition circuit of the proximity fuse:

$$\frac{U_1}{U_2} \geq \frac{H_o + vT}{H_o} \qquad (6)$$

A condition for the useability of the above relationship for triggering the ignition circuit is that the vertical speed v is known, alternatively that compensation is made for varying v.

For the CW doppler system the following is valid

$$v = 1/2 \cdot \lambda \cdot f_d \qquad (7)$$

where

$\lambda$ = the wavelength of the transmitter of the proximity fuse and

$f_d$ = the detected doppler frequency.

The dependence on the vertical speed v therefore can be compensated thereby that the triggering condition is made dependent upon the magnitude $f_d$ which is easy to measure in the proximity fuse.

This can be effected in the following manner:

From the equations (6) and (7) the following is obtained:

$$\frac{U_1}{U_2} \geq \frac{H_o + \dfrac{1}{2}\lambda f_d T}{H_o} = \frac{T \cdot \lambda \left(H_o \cdot \dfrac{2}{\lambda T} + f_d\right)}{H_o} \qquad (8)$$

or

$$\frac{U_1}{U_2} \cdot \frac{1}{H_o \cdot \dfrac{2}{\lambda T} + f_d} \geq \frac{\lambda T}{2 \cdot H_o} \qquad (9)$$

In the relationship (9) $U_1$ is as previously mentioned the amplitude of the doppler signal at the prevailing height h, while $U_2$ is the corresponding amplitude T seconds earlier. The quotient $U_1/U_2$ varies with the decreasing height h in such manner that for large heights it is practically equal to one. The left hand term in the relationship (9) is then smaller than the right hand term and the stated inequality is not fulfilled. When h decreases and approaches 0, i.e. when the projectile with the proximity fuse approaches ground, the quotient $U_1/U_2$ will increase rapidly and at a certain value on $U_1/U_2$ the left hand term will be larger than the right hand term. This occurs at a value on the quotient which is valid for the height $h=H_o$.

Thus the relationship (9) can be utilized for initiating burst at the desired height $H_o$ if the quotient $U_1/U_2$ is continuously measured and if this quotient is exposed to a signal processing which is represented by the expression

$$1/\left(H_o \frac{2}{\lambda T} + f_d\right),$$

where $f_d$ is the doppler frequency and if the ignition circuit is triggered when the so obtained signal exceeds $\lambda T/2 H_o$. Triggering will then take place at the height $H_o$.

According to the invention this is realized by means of the circuit shown in Fig. 1, where the divider 12 generates a signal of the frequency $f_d$ which has an amplitude corresponding to $U_1/U_2$ if the time delay in the network 14 is made equal to I. The filter 15 delivers a signal corresponding to the left hand part of the relationship (9) if it has a frequency characteristic F i.e. the ratio between output voltage and input voltage, equal to:

$$F = \frac{1}{f_o + f_d} \qquad (10)$$

where $f_d$ is the doppler frequency, and

$$f_o = H_o \frac{2}{T\lambda}$$

Initiation of burst then will take place at the height $h=H_o$ if the threshold in the threshold circuit is set equal to $\lambda T/2 H_o$ and the ignition is initiated when the threshold is exceeded in the threshold circuit.

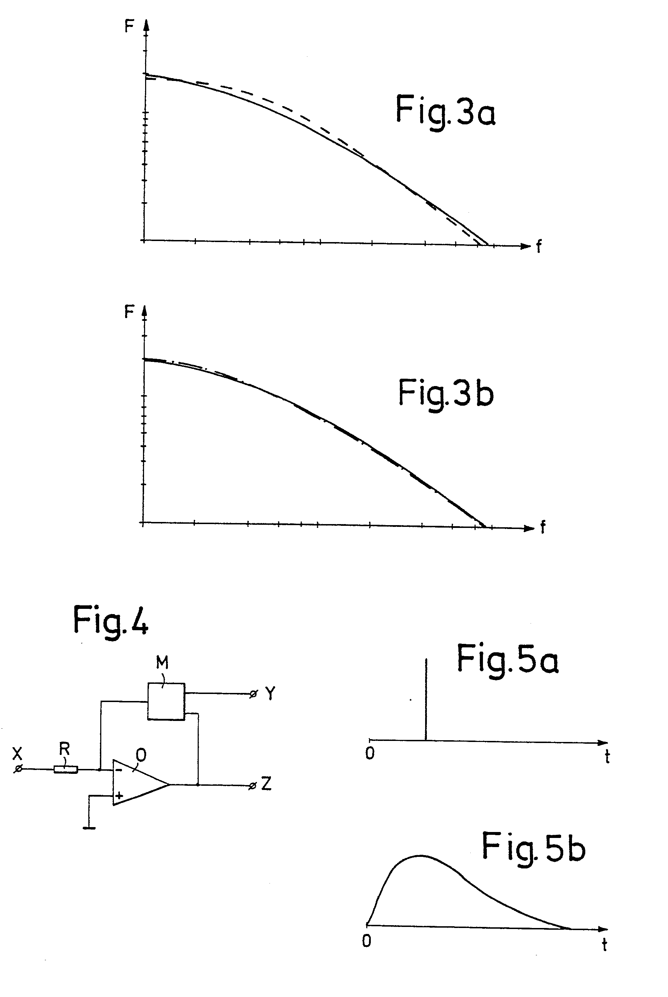

Thus the filter 15 should have a transfer function which is approximately equal to $1/(1+f_d/f_o)$. This corresponds to the frequency characteristic F given at equation (10) above, normalized by a factor $1/f_o$. A filter which with good approximation gives has a frequency characteristic within a given frequency range is shown in Fig. 2a. The filter is an RC-filter of first order and consists of a simple RC link of low-pass type comprising the resistance R1 and the capacitor C1 followed by an attenuator $D_1$. The frequency characteristic of the filter within the frequency range 10—1000 Hz is shown by the dashed line in Fig. 3a, where the ideal characteristic according to the relationship (10) is shown by a continuous line.

The shown coincidence between the frequency characteristics is normally sufficient. However, if a better approximation is desired a filter according to Fig. 2b can be used. Here a filter of second order is shown, which consists of a series link comprising the resistance R2 followed by the parallel combination R3, C2 and a parallel link with the capacitor C3 followed by an antenuator D2. Its characteristic is shown by the dashed and dotted line in Fig. 3b, the continuous line again representing the ideal characteristic.

A simple embodiment of an analogue divider which can be used in the circuit according to Fig. 1 is shown in Fig. 4. Here M designates an analogue multiplier while O is an operational amplifier and R is an input resistance. The circuit has two input terminals X and Y and one output terminal 2. If the signals at the different terminals are given the same designations as the respective terminal it is easy to prove that

$$Z = K \frac{X}{Y}$$

Thus in the present case the doppler signal from the sensor unit is supplied to the terminal X and the delayed doppler signal to the terminal Y, while the signal at the terminal Z is supplied to the filter 15.

The delay circuit 14 in Fig. 1 may for example be realized as an analogue CCD-shift register. This results in an idealized delay circuit with a pulse response which is shown in Fig. 5a. More favourable is, however, to use a linear filter having a pulse response according to Fig. 5b. This results in a response which is delayed average value of the applied signal. In this manner a smoothing effect will be obtained, which makes the system less sensitive to instantaneous disturbances in the detected doppler signal.

Apart from the shown elements, means must also be provided to prevent unintentional triggering when the signal levels are low and the system indeterminate. These means may suitably be realized by setting conditions upon the absolute size of the signal levels for triggering. The function represented by the blocks 12—16 in Figure 1 might easily be realised by a programmed microprocessor.

## Claims

1. A proximity fuse for projectiles, missiles or the like comprising means (10, 11) for transmission of an electromagnetic wave and reception of an electromagnetic wave which is reflected by an object, and a signal processing unit for comparing the current value of an input signal with the value of the input signal a given time interval previously, comprising the series circuit of an amplitude divider (12), a filter (15) and a fuse igniting circuit (17), characterized in that said means (10, 11) combine reflected waves with the transmitted waves to generate a doppler signal, that the amplitude divider (12) receives at one input a doppler signal ($U_1$), receives at a second input a delayed version of the doppler signal ($U_2$), and delivers a signal of doppler frequency, the amplitude of which corresponds to the quotient ($U_1/U_2$) of the current value of the amplitude ($U_1$) of the doppler signal and the amplitude ($U_2$) of the delayed version of the doppler signal, that said signal of doppler frequency is fed to the fuse ignition circuit (17) via a filter (16) having a transfer function which is approximately represented by the expression: $1/(1+f_d/f_o)$ and being normalised by a factor $1/f_o$, where $f_o$ is a system parameter and $f_d$ is the frequency of the doppler signal, that triggering of the fuse ignition circuit (17) takes place when the output signal of the filter (16) exceeds a certain level, and that the constant $f_o$ and the triggering level have such predetermined values that the fuse ignition circuit (17) is triggered at a predetermined distance from the reflected object.

2. A proximity fuse as claimed in Claim 1, characterized in that the filter (16), which approximates the said transfer function is an RC low pass filter of first order pass.

3. A proximity fuse as claimed in Claim 1, characterized in that the filter (16) is an RC-filter of second order.

4. A proximity fuse as claimed in any of Claims 1—3, characterized in that the delayed version of the doppler signal is generated by means of a linear filter of lowpass or bandpass type (14) preceded by an envelope detector (13) for the doppler signal.

## Patentansprüche

1. Näherungszünder für Projektile, Flugkörper und dergleichen mit Mitteln (10, 11) zum Übertragen einer elektromagnetischen Welle und zum Empfangen einer elektromagnetischen Welle, die an einem Körper reflektiert wird, sowie mit einer Signalverarbeitungseinheit zum Vergleichen des Ist-Wertes eines Eingangssignals mit dem Wert eines um ein bestimmtes Zeitintervall vorhergehenden Eingangssignals mit der Reihenschaltung aus einem Amplitudenteiler (12), einem Filter (15) und einem Zündererregungs- kreis (17), dadurch gekennzeichnet, dass die genannten Mittel (10, 11) zum Erzeugen eines Doppler-Signals reflektierte Wellen mit den übertragenen Wellen kombinieren, dass der Amplitudenteiler (12) an einem Eingang ein Doppler-Signal ($U_1$) erhält, an einem zweiten Eingang eine verzögerte Version des Doppler-Signals ($U_2$) erhält und ein Signal mit der Doppler-Frequenz liefert, wobei die Amplitude dieses Signals dem Quotienten ($U_1/U_2$) des Ist-Wertes der Amplitude ($U_1$) des Doppler-Signals und der Amplitude ($U_2$) der verzögerten Version des Doppler-Signals entspricht, dass das genannten Signal mit der Doppler-Frequenz dem Zündererregungskreis (17) zugeführt wird und zwar über ein Filter (16) mit einer Übertragungsfunktion, die annähernd durch den folgenden Ausdruck dargestellt wird: $1/(1+f_d+f_0)$ und durch den Faktor $1/f_0$ normalisiert wird, wobei $f_0$ ein Systemparameter und $f_d$ die Frequenz des Doppler-Signals ist, dass das Triggern des Zündererregungskreises (17) erfolgt, wenn das Ausgangssignal des Filters (16) einen bestimmten Pegel überschreitet und dass die Konstante $f_0$ und der Triggerpegel einen derart vorbestimmten Wert haben, dass der Zündererregungskreis (17) bei einem vorbestimmten Abstand von dem reflektierten Körper getriggert wird.

2. Annäherungszünder nach Anspruch 1, dadurch gekennzeichnet, dass das Filter (16), das der genannten Übertragungsfunktion annähert, ein RC-Tiefpassfilter erster Ordnung ist.

3. Annäherungszünder nach Anspruch 1, dadurch gekennzeichnet, dass das Filter (16) ein RC-Filter zweiter Ordnung ist.

4. Annäherungszünder nach einem der Ansprüche 1 bis 3, dadurch gekennzeichnet, dass die verzögerte Version des Doppler-Signals mittels eines Linearfilters vom Tiefpass- oder Bandpasstyp (14) erzeugt wird, dem ein Hüllkurvendemodulator (13) für das Doppler-Signal vorgeschaltet ist.

## Revendications

1. Fusée de proximité pour projectiles, missiles ou engins analogues comprenant des moyens (10, 11) pour émettre une onde électromagnétique et recevoir une onde électromagnétique réfléchie par un object, et une unité de traitement de signaux pour comparer la valeur du moment d'un signal d'entrée à la valeur du signal d'entrée obtenue un intervalle de temps donné auparavant, comprenant le circuit en série d'un diviseur d'amplitude (12), d'un filtre (15) et d'un circuit d'allumage de fusée (17), caractérisée en ce que lesdits moyens (10, 11) combinent des ondes réfléchies avec les ondes émises pour générer un signal Doppler, que le diviseur d'amplitude (12) reçoit à une entrée un signal Doppler ($U_1$) et à une seconde entrée, une version retardée ($U_2$) du signal Doppler et fournit un signal à la fréquence Doppler dont l'amplitude correspond au quotient ($U_1/U_2$) de la valeur du moment ($U_1$) de l'amplitude du signal Doppler et de l'amplitude ($U_2$) de la version retardée du signal Doppler, que le dit signal à la fréquence Doppler est introduit dans le circuit d'allumage de fusée (17) par l'intermédiaire d'un filtre (15) présentant une fonction de transfert qui est approximativement représentée par l'expression: $1/(1+f_d/f_0)$, normalisée par un facteur $1/f_0$, où $f_0$ est un paramètre de système et $f_d$ est la fréquence du signal Doppler, que le déclenchement du circuit d'allumage de fusée (17) de produit lorsque le signal de sortie du filtre (15) excède un certain niveau et que la constante $f_0$ et le niveau de déclenchement ont des valeurs prédéterminées telles que le circuit d'allumage de fusée (17) soit déclenché à une distance prédéterminée de l'objet réfléchissant.

2. Fusée de proximité suivant la revendication 1, caractérisé en ce que le filtre (15), qui s'approche de la fonction de transfert, est un filtre RC passe-bas de premier ordre.

3. Fusée de proximité suivant la revendication 1, caractérisée en ce que le filtre (15) est un filtre RC de second ordre.

4. Fusée de proximité suivant l'une quelconque des revendications 1 à 3, caractérisée en ce que la version retardée du signal Doppler est générée au moyen d'un filtre linéaire du type passe-bas ou passe-bande (14) précédé d'un détecteur d'enveloppe (13) pour le signal Doppler.

# Fig.1

# Fig.2a

# Fig.2b

1

F

Fig.3a

F

Fig.3b

Fig.4

M

Y

X

R

O

Z

Fig.5a

0                                    t

Fig.5b

0                                    t